# EUROPÄISCHE PATENTSCHRIFT

(11) **EP 2 546 717 B1**
(45) Veröffentlichungstag und Bekanntmachung des Hinweises auf die Patenterteilung: **20.05.2015**
(21) Anmeldenummer: 12173473.5
(22) Anmeldetag: 25.06.2012
(51) Int. Cl.: G05D 16/06

(54) **Druckregelventil für einen Kryotank**
Pressure regulating valve for a cryotank
Soupape de réglage de pression pour un cryoréservoir

(30) Priorität: 15.07.2011 DE 102011107415
(43) Veröffentlichungstag der Anmeldung: 16.01.2013
(73) Patentinhaber: Schuhbeck, Wilhelm, 83371 Stein (DE)
(72) Erfinder: Schuhbeck, Wilhelm, 83371 Stein (DE)
(74) Vertreter: Geirhos, Johann

(56) Entgegenhaltungen:
- DE-A1- 2 443 679
- DE-A1- 3 340 561
- DE-A1- 19 934 457

## Beschreibung

Die Erfindung betrifft ein Druckregelventil eines Kryotanks. Insbesondere betrifft die Erfindung ein Druckregelventil eines Kryotanks mit drei Anschlussstutzen und zwei Ventilsitzen, wobei ein erster Ventilsitz zwischen einem ersten Anschlussstutzen und einem zweiten Anschlussstutzen angeordnet ist und mit einem ersten Ventilkörper zusammen wirkt, der von einem Steuerfedermittel in Öffnungsrichtung vorgespannt ist, wobei ein zweiter Ventilsitz zwischen dem zweiten Anschlussstutzen und einem dritten Anschlussstutzen angeordnet ist, mit einem zweiten Ventilkörper zusammen wirkt und der zweite Ventilkörper durch zweite Federmittel in den zweiten Ventilsitz gedrückt wird.

Es ist nach dem Stand der Technik bekannt, tiefsiedende Gase, wie Stickstoff, Sauerstoff, Argon, Kohlendioxid, Wasserstoff oder Erdgas in flüssigem, tiefkaltem Zustand und unter Druck in Kryotanks mit variablem Füllungsgrad zu speichern. Dabei befindet sich in dem isolierten Kryotanks in einem Gasraum in dem oberen Bereich des Kryotanks Gas in Gasphase über dem Flüssigkeitsspiegel des flüssigen Gases. Der Druck des in Gasphase befindlichen Gases in dem Gasraum bestimmt den Druck in dem Kryotank.

Der Auslegungsdruck dieser Kryotanks erstreckt sich im Regelfall bis zu einem Bereich von maximal ca. 36 bar Überdruck. Durch die kontinuierliche Verdampfung von flüssigem Gas kommt es zu einem stetigen leichten Anstieg des Innenraumdrucks. Die Entnahme von Gas aus dem Kryotank zu Verbrauchern des Gases erfolgt aus dem unteren Bereich des Kryotanks in flüssiger Phase und das flüssige Gas wird auf dem Weg zu einem Verbraucher durch einen Verdampfer geleitet, in dem es verdampft wird. Dabei unterliegt die Entnahme zeitlich starken Schwankungen, wobei der Tankdruck möglichst konstant sein soll. Durch den Überdruck des Gasraums wird in dem Kryotank das Gas bei der Entnahme aus dem Kryotanks gedrückt und der Druck sinkt durch die Gasentnahme aufgrund der Expansion des Gases in dem Gasraum.

Es ist daher erforderlich, den Gasdruck, bzw. den Innendruck des Kryotanks zu regeln. Nach dem Stand der Technik bekannte, kombinierte Druckregler können sowohl einen Überdruck abbauen, als auch im Falle eines zu niedrigen Drucks verdampftes Gas dem Gasraum zuführen und dadurch den Druck zu erhöhen.

Dabei wird bei zu niedrigem Druck flüssiges Gas dem Kryotank entnommen, durch das kombinierte Druckregelventil gesteuert über einen Verdampfer verdampft und dem Gasraum zur Druckerhöhung zugeführt. Das kombinierte Druckregelventil wirkt hierbei als Druckaufbauregler.

Wenn in Entnahmepausen des flüssigen Gases, beispielsweise während eines Wochenendes, der Druck im Kryotank durch Verdampfung von flüssigem Gas ansteigt, so muss dieser Überdruck durch das kombinierte Druckregelventil aus dem Gasraum entweder zu den Verbrauchern oder auf sonstige Weise abgeführt werden. Das kombinierte Druckregelventil arbeitet dann als Druckabbauregler. Um unnötige Gasverluste zu vermeiden, wird dabei in der Entnahmepause ein Anstieg des Drucks zunächst zugelassen, soweit dies im Rahmen des erlaubten Betriebsdruckes möglich ist, und zu Beginn einer Entnahmephase wird zunächst über das Druckregelventil so lange Gas aus dem oberen Gasraum entnommen und dem Verbraucher zugeführt, bis der Druck auf einen zulässigen und gewünschten Wert abgebaut ist. Erst danach wird flüssiges Gas dem Kryotank entnommen. Zusätzlich benötigen diese Kryotanks als Sicherheitsmaßnahme noch Überdruckventile.

Ein Problem, das sich bei diesem anfänglichen Druckabbau in einer Entnahmephase stellt, ist es, eine mindestens so große Gasmenge zur Verfügung zu stellen, wie nach dem Öffnen des Entnahmeventils seitens der Verbraucher benötigt wird. Ist dies nicht der Fall, dann kann es dazu kommen, dass über das reguläre Entnahmerohr, das als Tauchrohr ausgebildet ist, flüssiges Gas angehoben wird und ein weiterer Druckabbau hierdurch blockiert wird. Bei bekannten Druckabbaureglern in kombinierten Druckregelventilen stehen zumeist lichte Durchmesser von weniger als ungefähr dem Querschnitt eines Bleistifts zur Verfügung und es treten hohe Strömungswiderstände auf. Dies limitiert die mögliche Durchsatzmenge und und es ist nicht gewährleistet, dass immer eine mindestens so große Gasmenge zur Verfügung steht, wie nach dem Öffnen des Entnahmeventils seitens der Verbraucher benötigt wird.

Ein weiteres bekanntes Problem herkömmlicher kombinierter Druckregler ist, dass beim Druckaufbau das Gas ausschließlich durch den statischen Druck des flüssigen Gases in den Verdampfer und von dort in den Gasraum getrieben wird. Auch hier führen geringe Querschnitt dazu, dass erst bei großen Druckdifferenzen eine Regelung stattfinden kann.

Aus der DE 24 43 679 ist ein Druckregelventil für die Druckregulierung in einem Tank für tiefkalte flüssige Gase bekannt. Ein erster Ventilkörper sitzt in einem ersten Ventilsitz und wird gegen den Druck einer Vorspannfeder durch eine Membran aus dem ersten Ventilsitz gehoben, wenn ein Schwellwert eines Drucks überschritten wird, so dass ein erster Auslassanschlussstutzen freigegeben wird und ein zu hoher Druck im Gasraum des Tanks abgebaut wird. Wenn der Druck unter einen zweiten Schwellwert fällt, so wird der verschiebbare erste Ventilsitz zusammen mit dem ersten Ventilkörper durch die Feder weiter verschoben, bis dieser eine Steuerkante freigibt und einen zweiten Auslassanschlussstutzen, so dass über einen Verdampfer flüssiges Gas dem Gasraum zur Druckerhöhung zugeführt wird.

Nachteilig an diesen bekannten Stand der Technik ist, dass keine individuelle Regelung des Sollwertes für den Druckabbau sowie für den Druckaufbau möglich ist.

Aus der DE 33 40 561 A1 ist ein selbsttätiges Druckregelventil eines Kryotanks bekannt, das drei Anschlussstutzen sowie zwei Ventilräume aufweist, die je mit einem Anschlussstutzen verbunden sind, wobei ein erster Ventilkörper mit Ventilsitz über ein Druckelement und eine Feder in Öffnungsrichtung vorgespannt einen ersten und einen zweiten Ventilraum trennt und ein zweiter Ventilkörper mit einem zweiten Ventilsitz den dritten Anschlussstutzen gegenüber dem ersten Ventilraum verschließt, wobei der zweite Ventilkörper über eine Druckstange mit einer zweiten Feder vorgespannt ist und gegen die Vorspannrichtung öffnet. Erster Ventilkörper und zweiter Ventilkörper sowie erster Ventilkörper und Gehäuse sind jeweils über Bälge verbunden, in deren Innerem ein Gasüberdruck anliegt.

Aus der DE 199 34 457 A1 ist ein Druckregler für einen Kryotank bekannt.

Der vorliegenden Erfindung liegt daher die Aufgabe zugrunde, ein kombiniertes Druckregelventil mit einer Druckaufbauregelung sowie einer Druckabbauregelung zur Verfügung zu stellen, das eine genauere Regelung ermöglicht und große Strömungsquerschnitte zur Verfügung stellt.

Diese Aufgabe wird durch ein Druckregelventil mit den Merkmalen des Anspruchs 1 gelöst. Vorteilhafte Weiterbildungen und Ausgestaltungen der Erfindung sind in den Unteransprüchen angegeben.

Die Aufgabe wird erfindungsgemäß dadurch gelöst, dass bei einem Druckregelventil eines Kryotanks mit drei Anschlussstutzen und zwei Ventilsitzen, wobei ein erster Ventilsitz zwischen einem ersten Anschlussstutzen und einem zweiten Anschlussstutzen angeordnet ist und mit einem ersten Ventilkörper zusammen wirkt, der von einem Steuerfedermittel in Öffnungsrichtung vorgespannt ist, wobei ein zweiter Ventilsitz zwischen dem ersten Anschlussstutzen und einem dritten Anschlussstutzen angeordnet ist, mit einem zweiten Ventilkörper zusammen wirkt und der zweite Ventilkörper durch zweite Federmittel in den zweiten Ventilsitz gedrückt wird, eine mit dem ersten Anschlussstutzen in Verbindung stehende Druckarbeitsfläche die Steuerfedermittel spannt und eine mechanische Zugverbindung mit der Druckarbeitsfläche sowie dem zweiten Ventilkörper über einen Leerweg angekoppelt verbunden ist, so dass ab einer bestimmten Komprimierung der Steuerfedermittel der zweite Ventilkörper aus dem zweiten Ventilsitz gehoben wird.

Vorteilhaft ermöglicht der erfindungsgemäße Aufbau es, mit einem einzigen Steuerfedermittel eine feinfühlige und schnell ansprechende Regelung zu erreichen. Die Differenz zwischen Druckaufbauregelung und Druckabbauregelung wird dabei durch den wirksamen Leerweg, mit dem die Zugverbindung angekoppelt ist, festgelegt. Dadurch kann der Gasdruck im Gasraum des Kryotanks als Regeldruck verwendet werden, der an dem Druckregelventil über den ersten Anschlussstutzen anliegt. Der erfindungsgemäße Aufbau des Druckregelventils ermöglicht es beispielsweise, den gesamten Regelbereich auf nominal 15% des Tankauslegungsdruckes des Kryotanks zu beschränken, entsprechend ungefähr der Hälfte der Größe gegenüber Regelungen nach dem Stand der Technik. Dadurch haben Dichte und Füllhöhe des flüssigen, tiefkalten Gases und dessen daraus resultierender statischer Druck keinen Einfluss auf den eingestellten Regeldruck im Gegensatz zu einer Regelung über den an einem Anschlussstutzen im unteren Bereich des Kryotanks anliegenden Druck. Die Beeinflussung durch diesen statischen Druck kann bei der Messgröße des Drucks des flüssigen Gases bis zu ca. 2 bar Schwankungen verursachen. Zum Beispiel kann ein Argontank mit 60 m³ Volumen eine Flüssigkeitsfüllhöhe von maximal 14 m aufweisen.

Dies ergibt bei einer Dichte von Argon von 1,4 einen Druck im Bodenbereich des Argontanks aufgrund der Flüssigkeitssäule von 1,96 bar.

In vorteilhafter Ausgestaltung der Erfindung öffnen der erste Ventilkörper und der zweite Ventilkörper beide zu dem ersten Anschlussstutzen hin aus den jeweiligen Ventilsitzen abhebend.

Der erste Ventilkörper wird im Fall eines zu niedrigen Drucks durch die auf Öffnung wirkende Vorspannung der Steuerfedermittel angehoben und gibt dadurch den Weg frei, damit durch einen Verdampfer flüssiges, kaltes Gas verdampft wird und in dem Gasraum expandiert, so dass der Druck in dem Kryotank sich erhöht. Durch die mit der erfindungsgemäßen Ausführung möglichen großen Querschnitte der geöffneten Ventilsitze aufgrund der getrennt angeordneten Druckarbeitsfläche kann das Druckregelventil bereits mit geringen Druckdifferenzen regeln. Der als Kegel ausgebildete erste Ventilkörper öffnet beispielsweise bereits bei einem fallenden Tankdruck, der nur 6% des Tankauslegungsdruckes beträgt, ausgehend von einem minimalen Sollwert, vollständig. Es entstehen somit nur geringe Strömungswiderstände und der statische Druck des flüssigen Gases ist ausreichend, um ein entsprechendes Gasvolumen durch den Verdampfer zu drücken. Der zweite Ventilkörper wird durch die Zugverbindung aus dem zweiten Ventilsitz angehoben, sobald auf die Druckarbeitsfläche aus dem ersten Anschlussstutzen ein so großer Druck wirkt, dass die Steuerfedermittel so weit zusammen gedrückt werden, dass der Leerweg überwunden wird. Dadurch wird dann Gas aus dem Gasraum über den ersten Anschlussstutzen zu dem dritten Anschlussstutzen geleitet, der mit der Gasentnahmeleitung des Kryotanks in Verbindung steht.

Die mechanische Zugverbindung kann aus einem Zugbolzen besteht, der einen in ein Langloch des zweiten Ventilkörpers greifenden Querbolzen aufweist.

Die Größe des Leerwegs wird dabei durch die Länge des Langlochs bestimmt. Sobald der Querbolzen an dessen Ende anschlägt, wird der Ventilkörper durch den Zugbolzen mitgenommen und angehoben.

Vorteilhaft ist der Zugbolzen in ein Gewinde der Druckarbeitsfläche geschraubt, so dass seine wirksame Länge einstellbar ist.

Dies ermöglicht eine sehr feinfühlige und genaue Einstellung der Druckdifferenz zwischen Druckabbauregelung und Druckaufbauregelung. Dabei kann der zweite Ventilkörper so ausgeführt sein, dass durch dessen Verdrehen über den Querbolzen der Zugbolzen gedreht wird. Hierfür kann eine Angreifmöglichkeit für ein Werkzeug, etwa ein Sechskant an dem zweiten Ventilkörper vorgesehen werden.

In günstiger Ausgestaltung der Erfindung ist die Druckarbeitsfläche als ein Arbeitskolben ausgebildet, der in einem separaten Raum angeordnet ist und durch die Steuerfedermittel vorgespannt wird.

Wenn die Druckarbeitsfläche als Arbeitskolben in einem getrennten Raum eines Ventilgehäuses angeordnet wird, so kann eine sehr große wirksame Fläche auf einfache Weise vorgesehen werden. Dies ermöglicht schon bei geringen Druckdifferenzen große Steuerkräfte bzw. eine große Komprimierung der Steuerfedermittel.

Zwischen einer Arbeitskolbenoberseite und dem ersten Ventilkörper kann ein Kraftübertragungselement angeordnet sein, an dem der erste Ventilkörper anliegt.

Der erste Ventilkörper wird bereits durch den Gasdruck in dem ersten Anschlussstutzen in seinen Ventilsitz gedrückt. Daher sind Kraftübertragungselemente, die den Ventilkörper nur in einer Richtung aus dem Ventilsitz anheben, ausreichend und ermöglichen zugleich, dass bei steigendem Gasdruck die Steuerfedermittel weiter zusammen gedrückt werden und die Zugverbindung bewegt wird.

In einer günstigen Ausführungsform der Erfindung besteht das Kraftübertragungselement aus einem um den Zugbolzen konzentrisch angeordneten Druckrohr und der Zugbolzen greift durch eine Bohrung des ersten Ventilkörpers hindurch.

Dies ermöglicht einen einfachen Aufbau, bei dem die beiden Ventilsitze einander gegenüberstehend in einem Raum des Druckregelventils angeordnet sind, der mit dem ersten Anschlussstutzen verbunden ist.

Zwischen dem zweiten Ventilkörper und einer Öffnung zu dem separaten Raum des Arbeitskolben kann vorteilhaft ein Dichtelement, insbesondere ein Wellrohrbalg, konzentrisch um das Druckrohr angeordnet sein, so dass die Druckarbeitsfläche des Arbeitskolbens über die Bohrung des ersten Ventilkörpers mit dem ersten Anschlussstutzen in Verbindung steht.

Dadurch wirkt auf die Druckarbeitsfläche in dem getrennten Raum des Arbeitskolbens allein der Gasdruck des ersten Anschlussstutzens, der durch die Bohrung des ersten Ventilkörpers entlang dem Druckrohr bzw. dem Zugbolzen zu der Öffnung des separaten Raums mit dem Arbeitskolben geleitet wird. Gegenüber dem mit dem flüssigen Gas gleichen Druck aufweisenden zweiten Anschlussstutzen besteht durch das Dichtelement keine Verbindung, so dass die Regelung allein anhand des Drucks in dem Gasraum über den ersten Anschlussstutzen erfolgt. Hierfür ist ein Wellrohrbalg besonders geeignet, da dieser die erforderliche Längsbeweglichkeit aufweist, um dem ersten Ventilkörper ein Abheben aus dem Ventilsitz zu ermöglichen, und zugleich radial gegenüber einer Druckdifferenz zwischen erstem und zweitem Anschlussstutzen ausreichend steif ist.

Der Arbeitskolben kann in dem separaten Raum durch einen Wellrohrbalg abgedichtet sein.

Dadurch kann eine gleitende Abdichtung vermieden werden, die bei den niedrigen Arbeitstemperaturen anfällig gegenüber Vereisung ist, beispielsweise aufgrund von Luftfeuchtigkeit.

Die Steuerfedermittel können eine an der Unterseite des Arbeitskolbens angeordnete Spiralfeder sein, die durch eine Einstellschraube vorgespannt werden kann.

Durch die Vorspannung dieser Spiralefder kann der Sollinnendruck des Kryotanks eingestellt werden. Dabei kann durch eine Einstelleschraube oder sonstige geeignete Mittel die Abstützung der Spiralfeder längs verstellt werden und diese dadurch vorgespannt werden. Vorteilhaft kann diese Einstellung auch im Betrieb des Druckregelventils angepasst werden.

In einer Weiterbildung der Erfindung weisen der Arbeitskolben und/oder eine Führung des Arbeitskolbens eine Kunststoffbeschichtung oder eine Kunststoffbuchse auf, insbesondere aus Teflon.

Dadurch wird ein Anhaften von Eis vermindert.

Die zweiten Federmittel können zwischen erstem Ventilkörper und zweiten Ventilkörper angeordnet sein, sich auf den ersten Ventilkörper abstützen und den ersten Ventilkörper in den ersten Ventilsitz drücken. Vorteilhaft bestehen die zweiten Federmittel aus einer Spiralfeder.

Vorteilhaft ist in dem dritten Anschlussstutzen ein nach außen öffnendes Rückschlagventil angeordnet, insbesondere ein Rückschlagventil mit einer lichten Weite von mindestens 15 mm.

Verbunden mit dem ersten Anschlussstutzen kann ein Sicherheitsüberdruckventil vorhanden sein.

Dadurch kann diese Funktion in das Druckregelventil mit integriert werden.

Vorteilhaft ist ein Gehäuse des Druckregelventils aus Aluminium gefertigt.

Aluminium stellt ein besonders kostengünstiges Material für das Gehäuse dar. Ausführungen des Gehäuses etwa aus CrNi-Stahl sind bis zu fünfmal teurer. Andere, tieftemperaturbeständige Werkstoffe, wie Messing, sind beispielsweise nicht seewasserbeständig. Rotguss ist Seewasser-beständig, aber wie Messing nicht einsetzbar in Ammoniak-haltiger Industrieatmosphäre.

Die Aluminiumoberflächen können zumindest teilweise harteloxiert sein.

Das ermöglicht die Verwendung von nicht Seewasser- beständigem Aluminium, das preisgünstiger und leichter zerspanbar ist.

Da Chrom Nickelwerkstoffe bei -75 °C deutlich verfestigen, kann es dadurch zu Unstetigkeiten und Sprüngen im Regelverhalten kommen. Es ist daher günstig, Federn aus Legierungen zu verwenden, die dieses Verhalten nicht aufweisen, beispielsweise Inconel X750/ 2.4669.

Kryotanks weisen zum Teil keine Ventile mehr auf, mit denen der Druckaufbauverdampfer und das Druckregelventil beim Befüllen des Kryotanks abgesperrt werden kann. Das hat zur Folge, dass ein Teilstrom des flüssigen Gases durch das Druckregelventil strömt, mit der Folge starker Turbulenzen.

Durch den durchgehenden Zugbolzen wird die Gefahr des Verkantens der Ventilkörper vermindert und werden die Ventilkörper stabilisiert. Es tritt in dieser Betriebssituation nur eine gleichmäßige Belastung der Dichtungen auf.

Weitere Vorteile und Einzelheiten der Erfindung werden anhand des in den schematischen Figuren dargestellten Ausführungsbeispiels näher erläutert. Hierbei zeigt
- Fig. 1: schematisch einen Kryotank mit einem erfindungsgemäßen Druckregelventil,
- Fig. 2: das erfindungsgemäße Druckregelventil im Querschnitt und
- Fig. 3: den mit III bezeichneten Detailausschnitt des Druckregelventils der Fig. 2.

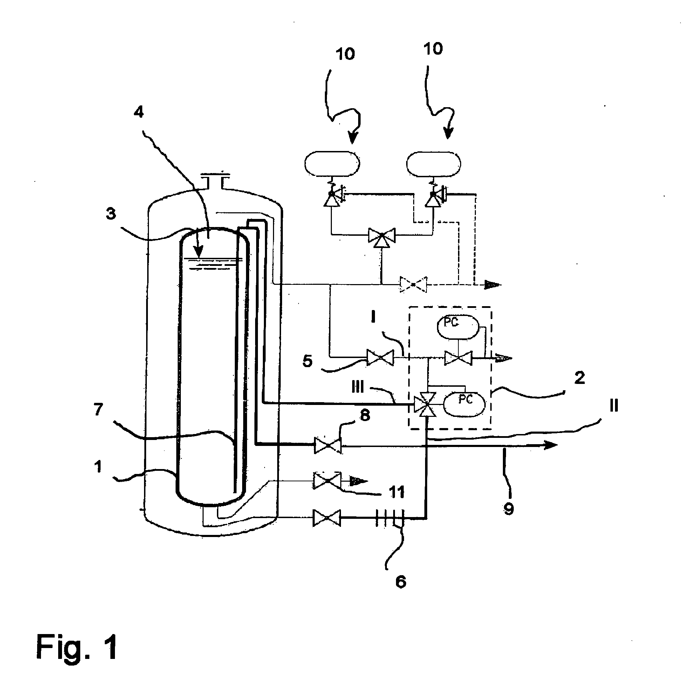

Die Fig. 1 zeigt schematisch einen Kryotank 1 mit dem als schematisches Schaltbild dargestellten erfindungsgemäßen Druckregelventil 2. Oberhalb eines Flüssigkeitsspiegels 3 des tiefkalten, flüssigen Gases in dem Kryotank 1 befindet sich ein Gasraum 4. Der Gasraum ist über eine Leitung und ein Ventil 5 mit einem ersten Anschlussstutzen I des Druckregelventils 2 verbundenen. Vom Boden des Kryotanks 1 führt über ein weiteres Ventil 5 und einen Druckaufbauverdampfer 6 eine Leitung zu einem zweiten Anschlussstutzen II des Druckregelventils 2. Über ein Tauchrohr 7 und ein Entnahmeventil 8 ist eine Entnahmeleitung 9 an den Kryotank 1 angeschlossen, die zu einem nicht dargestellten Verdampfer führt, in dem das flüssige Gas für die Verbraucher durch Wärmezufuhr verdampft wird. Mit dem Tauchrohr 7 und somit der Entnahmeleitung 9 ist über eine weitere Leitung ein dritter Anschlussstutzen III des Druckregelventil 2 verbunden. Mit dem Gasraum 4 sind Sicherheitsventile 10 verbunden, die das Gas ins Freie ablassen können. Ein Ventil 11 ermöglicht die Entnahme aus dem Kryotank 2 am Boden.

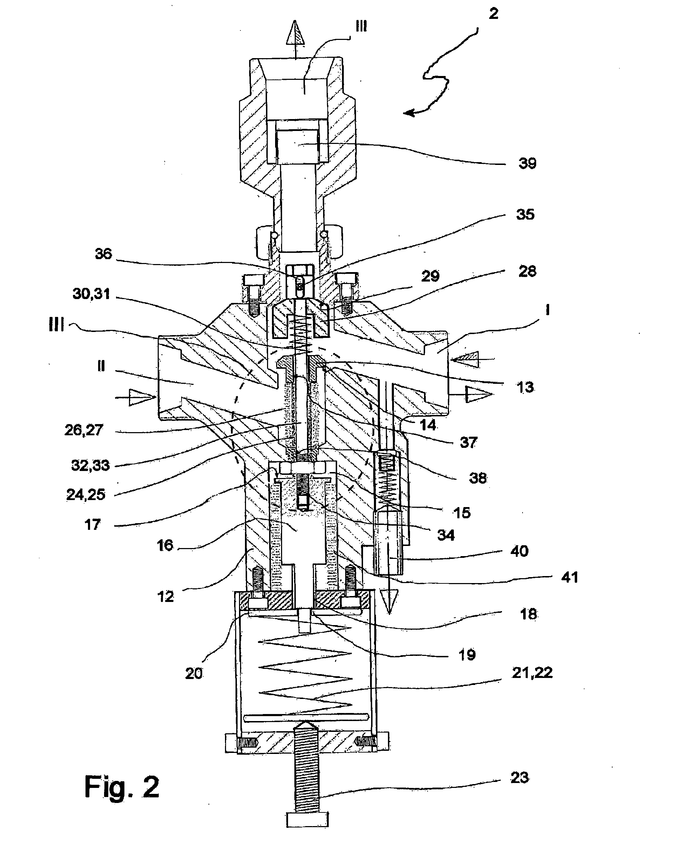

Die Fig. 2 zeigt das erfindungsgemäße Druckregelventil 2 der Fig. 1 im Querschnitt. In einem Gehäuse 12 aus Aluminium ist der erste Anschlussstutzen I angeordnet, der mit dem Gasraum 4 in der Fig. 1 verbunden ist. Ein erster Ventilkörper 13 wirkt mit einem ersten Ventilsitz 14 zusammen und dichtet den ersten Anschlussstutzen I gegenüber einem zweiten Anschlussstutzen II ab. In einem separaten Raum 15 ist ein Arbeitskolben 16 angeordnet, der eine Druckarbeitsfläche 17 aufweist. Die Unterseite des Arbeitskolbens 16 ist über einen angeformten Druckstift 18 und einen Absatz 19 sowie eine Druckplatte 20 durch eine Spiralefder 21, die als Steuerfedermittel 22 wirkt, vorgespannt. Die Spiralfeder 21 kann durch eine Einstellschraube 23 wiederum vorgespannt werden und dadurch die Vorspannung auf den Arbeitskolben 16 eingestellt werden. Ein als Druckübertragungsmittel 24 dienendes Druckrohr 25 überträgt die Vorspannung der Spiralfeder 21 auf den ersten Ventilkörper 13, der dadurch in Öffnungsrichtung vorgespannt wird. Konzentrisch um das Druckrohr 25 ist ein als Dichtelement 26 dienender Wellrohrbalg 27 angeordnet, der den Bereich des Druckrohrs 25 gegenüber dem zweiten Anschlussstutzen II abdichtet. Ein zweiter Ventilkörper 28 wirkt mit einem zweiten Ventilsitz 29 zusammen und dichtet den ersten Anschlussstutzen I gegenüber dem dritten Anschlussstutzen III ab. Zweite Federmittel 30, die als Spiralfeder 31 ausgebildet sind, stützen sich auf den ersten Ventilkörper 13 ab, und drücken den zweiten Ventilkörper 28 nach oben in den zweiten Ventilsitz 29. Ein als mechanische Zugverbindung 32 dienender Zugbolzen 33 ist in ein Gewinde 34 der Druckarbeitsfläche 17 des Arbeitskolbens 16 geschraubt. Über einen Querbolzen 35 des Zugbolzens 33, der in einem Langloch 36 des Zweiten Ventilkörpers 28 geführt ist, ist die Druckarbeitsfläche 15 über einen Leerweg so mit dem zweiten Ventilkörper 28 verbunden, dass ab einer bestimmten Komprimierung der Steuerfedernmittel 22 der zweite Ventilkörper 28 aus dem zweiten Ventilsitz 29 gehoben wird. Der Zugbolzen 33 ist dabei durch eine Bohrung 37 des ersten Ventilkörpers 13 und eine Öffnung 38 zu dem separaten Raum 15 geführt. In dem dritten Anschlussstutzen III ist ein Rückschlagventil 39 angeordnet. Weiterhin ist noch in dem ersten Anschlussstutzen I ein Sicherheitsventil 40 angeordnet. Der Arbeitskolben 16 wird durch einen weiteren Wellrohrbalg 41 abgedichtet.

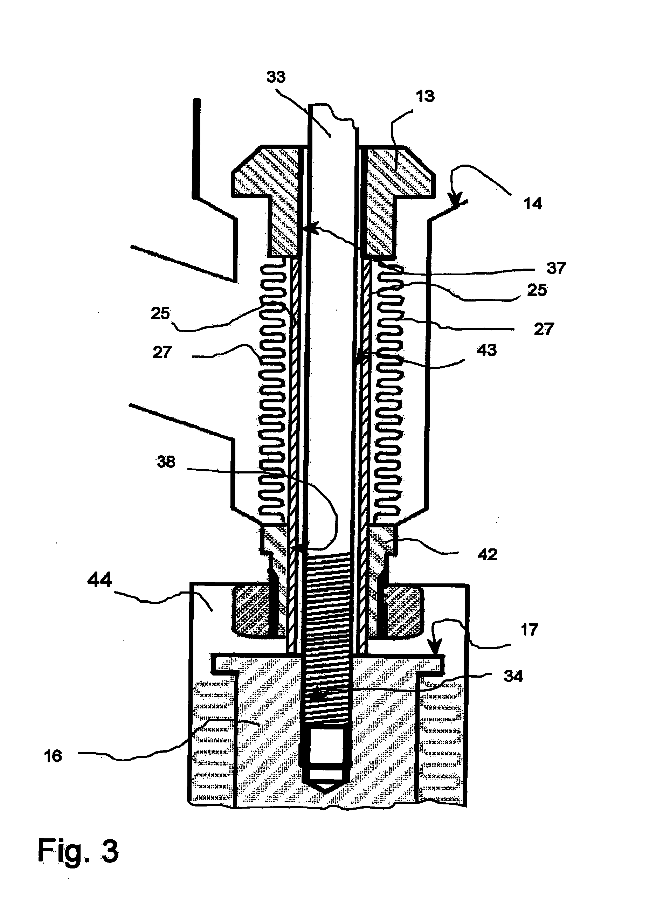

Die Fig. 3 zeigt den mit III bezeichneten Detailausschnitt des Druckregelventils 2 der Fig. 2. Der erste Ventilkörper 13 wirkt mit dem ersten Ventilsitz 14 zusammen und wird durch das Druckrohr 25 auf die Druckarbeitsfläche 17 des Arbeitskolbens 16 abgestützt. Der Zugbolzen 33 ist in das Gewinde 34 in dem Arbeitskolben 16 geschraubt. Der Wellrohrbalg 27 ist konzentrisch um den Zugbolzen 33 und das Druckrohr 25 angeordnet und an der Oberseite dichtend mit dem ersten Ventilkörper 13 sowie an der Unterseite ebenfalls dichtend mit einem Verschraubungsstück 42 verbunden, in dem sich die Öffnung zu dem separaten Raum 44 für den Arbeitskolben 16 befindet. Über die Bohrung 37 in dem ersten Ventilkörper 13 und den Raum 43 im Inneren des Wellrohrbalg 27 besteht somit eine Verbindung zu dem separaten Raum 44 und der Druck oberhalb des Ventilkörpers 13 wirkt auf die Druckarbeitsfläche 17. In der Darstellung der Fig. 3 ist der Druck dabei so gering, dass durch die Vorspannung in Öffnungsrichtung des Ventilkörpers 13 durch die Spiralfeder 21 der erste Ventilkörper 13 über das Druckrohr 25 aus seinem Ventilsitz angehoben ist.

Bei unter den Sollwert fallendem Druck im Gasraum 4 des Kryotanks 1 reicht der auf die Druckarbeitsfläche 17 wirkende Gasdruck nicht mehr aus und die Spiralefder 21 drückt über den Absatz 19 den Arbeitskolben 16 weiter nach oben. Über das Druckrohr 25 wird, wie in Fig. 3 dargestellt, der erste Ventilkörper 13 aus dem ersten Ventilsitz 14 angehoben. Somit kann das Gas auf Grund des im Kryotank 1 anstehenden statischen Druckes über den Druckaufbauverdampfer 6 zu dem Anschlussstutzen II und in dem Druckregelventil 2 über den ersten Anschlussstutzen I weiter in den Gasraum 4 des Kryotanks 1 strömen. Je stärker der Tankdruck fällt, desto weiter öffnet der erste Ventilkörper 13. Sobald der Druck im Gasraum 4 wieder zunimmt, bewegt sich die Druckarbeitsfläche 17 wieder nach unten. Der erste Ventilkörper 13 folgt dieser Bewegung durch die expandierende Spiralfeder 31, bis der erste Ventilkörper 13 in dem ersten Ventilsitz 14 aufsitzt und schließt.

Dabei verschiebt sich die Lage des Querbolzens 35 in dem Langloch 36, ohne dass der zweite Ventilkörper 28 bewegt wird. Dies ist der Druckbereich, in dem sowohl der erste Ventilkörper 13, als auch der zweite Ventilkörper 28 geschlossen sind. Es strömt kein Gas durch das Druckregelventil 2, der Tankdruck entspricht dem Sollwert. Die Größe dieses Druckbereichs zwischen Druckabbauregelung und Druckaufbauregelung ist durch Veränderung des Abstandes von Querbolzen 35 und Druckarbeitsfläche 17 einstellbar, indem der zweite Ventilkörper 28 mit dem Zugbolzen 33 gedreht wird, so dass der Zugbolzen 33 weiter in das Gewinde 34 in dem Arbeitskolben 16 eintaucht. Bei über den Sollwert steigendem Tankdruck bewegt sich der Arbeitskolben 16 weiter nach unten und zieht über den Bolzen 33 den zweiten Ventilkörper 28 mit, der somit geöffnet wird. Gas strömt von dem ersten Anschlussstutzen I in den Anschlussstutzen III sowie durch das Rückschlagventil 39 zu der Entnahmeleitung 9.

Die Stärke der Spiralfeder 31 ist so gewählt, dass der erste Ventilkörper 13 bei erhöhtem Druck in dem zweiten Anschlussstutzen II öffnet. Diese Überdrucksicherung öffnet, wenn flüssiges oder kaltes Gas durch eine Fehlbedienung der Tankventile eingesperrt wird und in Folge dessen unzulässiger Druck entstehen würde. Das Überdruckventil 40 ist so eingestellt, dass es öffnet, bevor die Tanksicherheitsventile 10 in der Fig. 1 öffnen. Die Abblaseleistung ist höher als die normale Verdampfungsrate des Kryotanks 1.

Da der Wellrohrbalg 27 den zweiten Anschlussstutzen II gegenüber dem Raum 43 in seinem Inneren und somit dem Druck des ersten Anschlussstutzens I trennt, wird das Druckregelventil 2 durch den Gasdruck des Gasraums 4 des Kryotanks 1 gesteuert. Mit der Einstellschraube 23 kann der gewünschte Sollwert des Tankdrucks durch Vorspannen der Spiralfeder 21 eingestellt werden.

## Patentansprüche

1. Druckregelventil für einer Kryotanks (1) wobei das Druckregelventil drei Anschlussstutzen (I, II, III) und zwei Ventilsitzen (14,29), umfasst wobei ein erster Ventilsitz (14) zwischen einem ersten Anschlussstutzen (I) und einem zweiten Anschlussstutzen (II) angeordnet ist und mit einem ersten Ventilkörper (13) zusammen wirkt, der von Steuerfedermitteln (22) in Öffnungsrichtung des ersten Ventilsitz vorgespannt ist, wobei ein zweiter Ventilsitz (29) zwischen dem ersten Anschlussstutzen (I) und einem dritten Anschlussstutzen (III) angeordnet ist, mit einem zweiten Ventilkörper (28) zusammen wirkt und der zweite Ventilkörper (28) durch zweite Federmittel (30) in den zweiten Ventilsitz (29) gedrückt wird,
**dadurch gekennzeichnet,**
**dass** eine mit dem ersten Anschlussstutzen (I) in Verbindung stehende Druckarbeitsfläche (17) die Steuerfedermittel (22) spannt und eine mechanische Zugverbindung (32) mit der Druckarbeitsfläche (17) sowie dem zweiten Ventilkörper (28) über einen Leerweg angekoppelt verbunden ist, so dass ab einer bestimmten Komprimierung der Steuerfedermittel (22) der zweite Ventilkörper (28) aus dem zweiten Ventilsitz (29) gehoben wird.

2. Druckregelventil nach Anspruch 1,
**dadurch gekennzeichnet,**
**dass** der erste Ventilkörper (13) und der zweite Ventilkörper (28) beide zu dem ersten Anschlussstutzen (I) hin aus den jeweiligen Ventilsitzen (14,29) abhebend öffnen.

3. Druckregelventil nach Anspruch 2,
**dadurch gekennzeichnet,**
**dass** die mechanische Zugverbindung (32) aus einem Zugbolzen (33) besteht, der einen in einem Langloch (36) des zweiten Ventilkörpers (28) greifenden Querbolzen (35) aufweist.

4. Druckregelventil nach Anspruch 3,
**dadurch gekennzeichnet,**
**dass** der Zugbolzen (33) in ein Gewinde (34) der Druckarbeitsfläche (17) geschraubt ist, so dass seine wirksame Länge einstellbar ist.

5. Druckregelventil nach einem der Ansprüchen 2 bis 4,
**dadurch gekennzeichnet,**
**dass**, die Druckarbeitsfläche (17) als ein Arbeitskolben (16) ausgebildet ist, der in einem separaten Raum angeordnet ist und durch die Steuerfedermittel (22) vorgespannt wird.

6. Druckregelventil nach Anspruch 5,
**dadurch gekennzeichnet,**
**dass** zwischen einer Arbeitskolbenoberseite und dem ersten Ventilkörper (13) ein Kraftübertragungselement (24) angeordnet ist, an dem der erste Ventilkörper (13) anliegt.

7. Druckregelventil nach Anspruch 4 und 6,
**dadurch gekennzeichnet,**
**dass** das Kraftübertragungselement (24) aus einem um den Zugbolzen (33) konzentrisch angeordneten Druckrohr (25) besteht und der Zugbolzen (33) durch eine Bohrung (37) des ersten Ventilkörpers (13) hindurchgreift.

8. Druckregelventil nach Anspruch 7,
**dadurch gekennzeichnet,**
**dass** zwischen zweitem Ventilkörper (28) und einer Öffnung (38) zu dem separaten Raum des Arbeitskolbens (16) ein Dichtelement (26), insbesondere ein Wellrohrbalg (27), konzentrisch um das Druckrohr (25) angeordnet ist, so dass die Druckarbeitsfläche (17) des Arbeitskolbens (16) über die Bohrung (37) des ersten Ventilkörpers (13) mit dem ersten Anschlussstutzen (I) in Verbindung steht.

9. Druckregelventil nach einem der Ansprüche 5 bis 8,
**dadurch gekennzeichnet,**
**dass** der Arbeitskolben (16) in dem separaten Raum durch einen Wellrohrbalg (41) abgedichtet ist.

10. Druckregelventil nach einem der Ansprüche 5 bis 9,
**dadurch gekennzeichnet,**
**dass** die Steuerfedermittel (22) eine an der Unterseite des Arbeitskolben (16) angeordnete Spiralfeder (21) sind, die durch eine Einstellschraube (23) vorgespannt werden kann.

11. Druckregelventil nach einem der Ansprüche 5 bis 10,
**dadurch gekennzeichnet,**
**dass** der Arbeitskolben (16) und/oder eine Führung des Arbeitskolbens (16) eine Kunststoffbeschichtung oder eine Kunststoffbuchse aufweist, insbesondere aus Teflon.

12. Druckregelventil nach einem der Ansprüche 1 bis 11,
**dadurch gekennzeichnet,**
**dass** die zweiten Federmittel (30) zwischen erstem Ventilkörper (13) und zweiten Ventilkörper (28) angeordnet sind, sich auf den ersten Ventilkörper (13) abstützen und den ersten Ventilkörper (13) in den ersten Ventilsitz (14) drücken.

13. Druckregelventil nach einem der Ansprüche 1 bis 12,
**dadurch gekennzeichnet,**
**dass** in dem dritten Anschlussstutzen (III) ein nach außen öffnendes Rückschlagventil (39) angeordnet ist, insbesondere ein Rückschlagventil (39) mit einer lichten Weite von mindestens 15 mm.

14. Druckregelventil nach einem der Ansprüche 1 bis 13,
**dadurch gekennzeichnet,**
**dass**, verbunden mit dem ersten Anschlussstutzen (I), ein Sicherheitsüberdruckventil (40) vorhanden ist.

15. Druckregelventil nach einem der Ansprüche 1 bis 14,
**dadurch gekennzeichnet,**
**dass** ein Gehäuse (12) des Druckregelventils (2) aus Aluminium gefertigt ist.

16. Druckregelventil nach Anspruch 15,
**dadurch gekennzeichnet,**
**dass** die Aluminiumoberflächen zumindest teilweise harteloxiert sind.

## Claims

1. Pressure regulating valve for a cryotank (1), the pressure regulating valve comprising three connection pieces (I, II, III) and two valve seats (14, 29), a first valve seat (14) being arranged between a first connection piece (I) and a second connection piece (II) and cooperating with a first valve body (13) which is prestressed in the opening direction of the first valve seat by control spring means (22), a second valve seat (29) being arranged between the first connection piece (I) and a third connection piece (III) and cooperating with a second valve body (28), and the second valve body (28) being pressed into the second valve seat (29) by second spring means (30), **characterized in that** a pressure worksurface (17) connected to the first connection piece (I) tensions the control spring means (22), and a mechanical traction connection (32) is connected to the pressure worksurface (17) and to the second valve body (28) by idle-travel coupling, so that, beyond a specific compression of the control spring means (22), the second valve body (28) is lifted out of the second valve seat (29).

2. Pressure regulating valve according to Claim 1, **characterized in that** the first valve body (13) and the second valve body (28) both open by being lifted off from the respective valve seats (14, 29) towards the first connection piece (I).

3. Pressure regulating valve according to Claim 2, **characterized in that** the mechanical traction connection (32) consists of a traction bolt (33) which has a crossbolt (35) engaging in a long hole (36) of the second valve body (28).

4. Pressure regulating valve according to Claim 3, **characterized in that** the traction bolt (33) is screwed into a thread (34) of the pressure worksurface (17), so that the effective length of the said traction bolt is adjustable.

5. Pressure regulating valve according to one of Claims 2 to 4, **characterized in that** the pressure worksurface (17) is designed as a working piston (16) which is arranged in a separate space and which is prestressed by the control spring means (22).

6. Pressure regulating valve according to Claim 5, **characterized in that**, between a working-piston top side and the first valve body (13), a force transmission element (24) is arranged, against which the first valve body (13) bears.

7. Pressure regulating valve according to Claims 4 and 6, **characterized in that** the force transmission element (24) consists of a pressure pipe (25) arranged concentrically around the traction bolt (33), and the traction bolt (33) engages through a bore (37) of the first valve body (13).

8. Pressure regulating valve according to Claim 7, **characterized in that**, between the second valve body (28) and an orifice (38) to the separate space of the working piston (16), a sealing element (26), in particular a corrugated pipe concertina (27), is arranged concentrically around the pressure pipe (25), so that the pressure worksurface (17) of the working piston (16) is connected to the first connection piece (I) via the bore (37) of the first valve body (13).

9. Pressure regulating valve according to one of Claims 5 to 8, **characterized in that** the working piston (16) is sealed off in the separate space by a corrugated pipe concertina (41).

10. Pressure regulating valve according to one of Claims 5 to 9, **characterized in that** the control spring means (22) are a helical spring (21) which is arranged on the underside of the working piston (16) and which can be prestressed by a setscrew (23).

11. Pressure regulating valve according to one of Claims 5 to 10, **characterized in that** the working piston (16) and/or a guide of the working piston (16) have/has a plastic coating or a plastic bush made, in particular, from Teflon.

12. Pressure regulating valve according to one of Claims 1 to 11, **characterized in that** the second spring means (30) are arranged between the first valve body (13) and second valve body (28), are supported on the first valve body (13) and press the first valve body (13) into the first valve seat (14).

13. Pressure regulating valve according to one of Claims 1 to 12, **characterized in that** an outwardly opening non-return valve (39), in particular a non-return valve (39) with a clear width of at least 15 mm, is arranged in the third connection piece (III).

14. Pressure regulating valve according to one of Claims 1 to 13, **characterized in that** a pressure relief safety valve (40) is present, connected to the first connection piece (I).

15. Pressure regulating valve according to one of Claims 1 to 14, **characterized in that** a housing (12) of the pressure regulating valve (2) is manufactured from aluminium.

16. Pressure regulating valve according to Claim 15, **characterized in that** the aluminium surfaces are at least partially hard-anodized.

## Revendications

1. Soupape de régulation de la pression pour un cryoréservoir (1), la soupape de régulation de la pression comprenant trois raccords (I, II, III) et deux sièges de soupape (14, 29), un premier siège de soupape (14) étant disposé entre un premier raccord (I) et un deuxième raccord (II) et coopérant avec un premier corps de soupape (13) qui est précontraint par des moyens de ressort de commande (22) dans la direction d'ouverture du premier siège de soupape, un deuxième siège de soupape (29) étant disposé entre le premier raccord (I) et un troisième raccord (III), coopérant avec un deuxième corps de soupape (28) et le deuxième corps de soupape (28) étant pressé par des deuxièmes moyens de ressort (30) dans le deuxième siège de soupape (29),
**caractérisée en ce**
**qu'**une surface de travail de pression (17) en liaison avec le premier raccord (I) tend les moyens de ressort de commande (22) et une liaison de traction mécanique (32) est connectée de manière raccordée avec la surface de travail de pression (17) et avec le deuxième corps de soupape (28) par le biais d'une course à vide de telle sorte qu'à partir d'une certaine compression des moyens de ressort de commande (22), le deuxième corps de soupape (28) soit soulevé du deuxième siège de soupape (29).

2. Soupape de régulation de la pression selon la revendication 1,
**caractérisée en ce que**
le premier corps de soupape (13) et le deuxième corps de soupape (28) s'ouvrent tous les deux vers le premier raccord (I) en se soulevant depuis les sièges de soupape respectifs (14, 29).

3. Soupape de régulation de la pression selon la revendication 2,
**caractérisée en ce que**
la liaison de traction mécanique (32) se compose d'un boulon de traction (33) qui présente un boulon transversal (35) s'engageant dans un trou oblong (36) du deuxième corps de soupape (28).

4. Soupape de régulation de la pression selon la revendication 3,
**caractérisée en ce que**
le boulon de traction (33) est vissé dans un filetage (34) de la surface de travail de pression (17) de telle sorte que sa longueur active puisse être ajustée.

5. Soupape de régulation de la pression selon l'une quelconque des revendications 2 à 4,
**caractérisée en ce que**
la surface de travail de pression (17) est réalisée sous forme de piston de travail (16) qui est disposé dans un espace séparé et qui est précontraint par les moyens de ressort de commande (22) .

6. Soupape de régulation de la pression selon la revendication 5,
**caractérisée en ce**
**qu'**entre un côté supérieur de piston de travail et le premier corps de soupape (13) est disposé un élément de transfert de force (24) contre lequel s'applique le premier corps de soupape (13).

7. Soupape de régulation de la pression selon les revendications 4 et 6,
**caractérisée en ce que**
l'élément de transfert de force (24) se compose d'un tube de pression (25) disposé concentriquement autour du boulon de traction (33) et le boulon de traction (33) vient en prise à travers un alésage (37) du premier corps de soupape (13).

8. Soupape de régulation de la pression selon la revendication 7,
**caractérisée en ce**
**qu'**entre le deuxième corps de soupape (28) et une ouverture (38) vers l'espace séparé du piston de travail (16), un élément d'étanchéité (26), notamment un soufflet tubulaire ondulé (27), est disposé concentriquement autour du tube de pression (25) de telle sorte que la surface de travail de pression (17) du piston de travail (16) soit en liaison par le biais de l'alésage (37) du premier corps de soupape (13) avec le premier raccord (I).

9. Soupape de régulation de la pression selon l'une quelconque des revendications 5 à 8,
**caractérisée en ce que**
le piston de travail (16) dans l'espace séparé est étanchéifié par un soufflet tubulaire ondulé (41).

10. Soupape de régulation de la pression selon l'une quelconque des revendications 5 à 9,
**caractérisée en ce que**
les moyens de ressort de commande (22) sont un ressort spiral (21) disposé au niveau du côté inférieur du piston de travail (16), lequel peut être précontraint par une vis de réglage (23).

11. Soupape de régulation de la pression selon l'une quelconque des revendications 5 à 10,
**caractérisée en ce que**
le piston de travail (16) et/ou un guide du piston de travail (16) présentent un revêtement en plastique ou une douille en plastique, en particulier en Téflon.

12. Soupape de régulation de la pression selon l'une quelconque des revendications 1 à 11,
**caractérisée en ce que**
les deuxièmes moyens de ressort (30) sont disposés entre le premier corps de soupape (13) et le deuxième corps de soupape (28), s'appuient sur le premier corps de soupape (13) et pressent le premier corps de soupape (13) dans le premier siège de soupape (14).

13. Soupape de régulation de la pression selon l'une quelconque des revendications 1 à 12,
**caractérisée en ce que**
dans le troisième raccord (III) est disposé un clapet anti-retour s'ouvrant vers l'extérieur (39), en particulier un clapet anti-retour (39) ayant une largeur intérieure d'au moins 15 mm.

14. Soupape de régulation de la pression selon l'une quelconque des revendications 1 à 13,
**caractérisée en ce**
**qu'**il est prévu une soupape de surpression de sécurité (40) connectée au premier raccord (I).

15. Soupape de régulation de la pression selon l'une quelconque des revendications 1 .à 14,
**caractérisée en ce**
**qu'**un boîtier (12) de la soupape de régulation de la pression (2) est fabriqué en aluminium.

16. Soupape de régulation de la pression selon la revendication 15,
**caractérisée en ce que**
les surfaces en aluminium sont au moins en partie anodisées dur.
